# EUROPEAN PATENT APPLICATION

(11) **EP 4 585 317 A1**
(43) Date of publication of application: **16.07.2025**
(21) Application number: 24781154.0
(22) Date of filing: 25.03.2024
(51) Int. Cl.: B05C 5/02, B05C 11/10, H01M 4/04

(54) **SHIM PLATE AND DIE COATER COMPRISING SAME**

(30) Priority: 27.03.2023 KR 20230039617
(71) Applicant: LG Energy Solution, Ltd., Seoul 07335 (KR)
(72) Inventor: PARK, Joon Sun, Daejeon 34122 (KR)
(74) Representative: Plasseraud IP
(86) International application number: PCT/KR2024/003696
(87) International publication number: WO 2024/205163

(57) **Abstract**

A shim plate configured to discharge an electrode slurry in a first direction. The shim plate includes: (1) a base extending in a second direction perpendicular to the first direction; (2) a separator connected to the base and protruding from the base in the first direction; (3) wings connected to ends of the base in the second direction; and (4) guides connected to the wings and protruding toward the separator from the wings in the second direction. A length of each of the guides in the second direction is in a range of 4 mm to 50 mm.

## Description

### [Technical Field]

The present invention relates to a shim plate and a die coater including the same. The present application claims the benefit of priority based on Korean Patent Application No. 10-2023-0039617, filed on March 27, 2023, and the entire contents of the Korean patent application is incorporated herein by reference.

### [Background Art]

A secondary battery can be charged and discharged a plurality of times unlike a primary battery. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

Electrodes of a secondary battery are most important components of the secondary battery in terms of an energy density. The electrodes of the secondary battery may be formed through a coating process, a roll press process, a drying process, a slitting process, and a notching process. Among these processes, the coating process is a process of applying a slurry containing an active material onto an electrode plate and may be performed by a die coater.

### [Disclosure]

### [Technical Problem]

The present disclosure is directed to providing a shim plate with improved reliability and a die coater including the same.

### [Technical Solution]

Example aspects of the present disclosure provide a shim plate configured to discharge an electrode slurry in a first direction. The shim plate includes a base extending in a second direction perpendicular to the first direction, a separator connected to the base and protruding from the base in the first direction, wings connected to ends of the base in the second direction, and guides connected to the wings and protruding toward the separator from the wings in the second direction, in which a length of each of the guides in the second direction is in a range of 4 mm to 50 mm.

A length of each of the guides in the second direction may be 20 mm or less.

The length of each of the guides in the second direction may be 10 mm or less.

Example aspects provide a die coater. The die coater includes a first die including a manifold to which an electrode slurry is supplied, and a shim plate provided on the first die and including a slit that is a path in which the electrode slurry is discharged. The shim plate may include a base extending in a second direction perpendicular to a first direction in which the electrode slurry is discharged, wings connected to ends of the base in the second direction, and guides connected to the wings and protruding from the wings toward a center of the base in the second direction. The base partially covers the manifold.

A width of the manifold exposed from the base in the first direction may be in a range of 5 mm to 50 mm.

The width of the manifold exposed from the base in the first direction may be 20 mm or less.

The width of the manifold exposed from the base in the first direction may be 10 mm or less.

A length of each of the guides in the second direction may be in a range of 4 mm to 50 mm.

The length of each of the guides in the second direction may be 20 mm or less.

The length of each of the guides in the second direction may be 10 mm or less.

Example aspects provide a die coater. The die coater include a first die including a manifold to which an electrode slurry is supplied, and a shim plate disposed on the first die and including a slit that is a path in which the electrode slurry is discharged, in which the shim plate includes a base extending in a second direction perpendicular to a first direction in which the electrode slurry is discharged, wings connected to ends of the base in the second direction, and guides connected to the wings and protruding from the wings toward a center of the base in the second direction, and a length of each of the guides in the second direction is in a range of 4 mm to 50 mm.

The length of each of the guides in the second direction may be 10 mm or less.

A length of the base in the first direction may be in a range of 25 mm to 100 mm.

The length of the base in the first direction may be 50 mm or more.

### [Advantageous Effects]

According to example aspects of the present disclosure, a length of each of guides of a shim plate is in a range of 4 mm to 50 mm, and a width of a base of the shim plate is greater than the length of each of the guides. Accordingly, the deformation of the shim plate can be prevented during fine alignment thereof.

Effects achievable from example aspects of the present disclosure are not limited to the above-described effects, and other effects that are not described herein will be clearly derived and understood by those of ordinary skilled in the art to which the example aspects of the present disclosure pertain from the following description. That is, unintended effects achieved when the example aspects of the present disclosure are implemented are derivable by those of ordinary skilled in the art from the example aspects of the present disclosure.

### [Brief Description of the Drawings]

FIG. 1 is a perspective view of a die coater according to example aspects.
FIG. 2 is an exploded perspective view of a die coater according to example aspects.
FIG. 3 is a plan view of a shim plate.
FIG. 4 illustrates a shim plate on a first die.
FIG. 5 is a graph for describing an effect of a shim plate according to example aspects.
FIG. 6 is a flowchart of a secondary battery manufacturing method according to example aspects.
FIG. 7 is a flowchart of a secondary battery manufacturing method according to example aspects.

### [Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts corresponding to the present invention on the basis of the principle that the inventor(s) of the application can appropriately define the terms or expressions to optimally explain the present invention.

Therefore, embodiments set forth herein and configurations illustrated in the drawings are only examples of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Aspect )

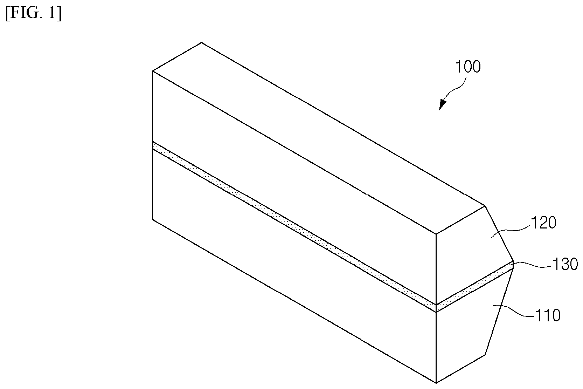

FIG. 1 is a perspective view of a die coater 100 according to example aspects.

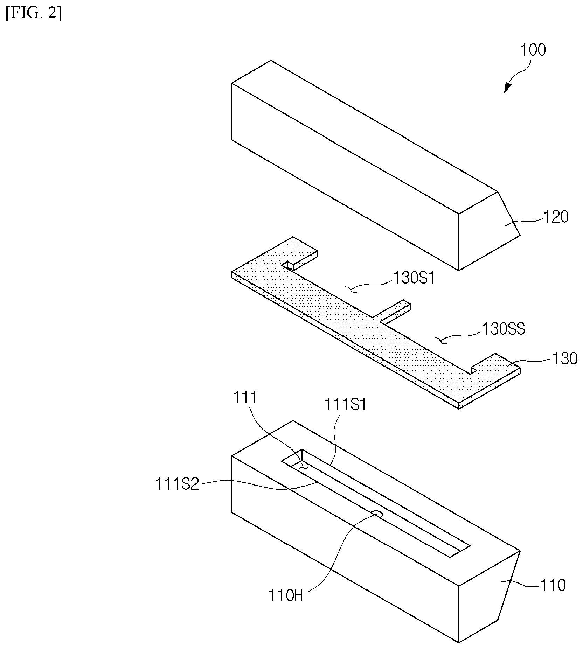

FIG. 2 is an exploded perspective view of the die coater 100 according to example aspects.

Referring to FIG. 1 and FIG. 2, the die coater 100 may include a first die 110, a second die 120, and a shim plate 130. According to example aspects, the die coater 100 may be configured to discharge an electrode slurry. According to example aspects, the die coater 100 may be configured to coat an electrode plate with the electrode slurry.

The electrode slurry may be used to manufacture electrodes of a secondary battery. The electrode slurry may include an electrode active material, a conductive agent, a binder, and a solvent. The electrode slurry may be prepared by dissolving the electrode active material, the conductive additive, the binder, etc. in the solvent. The solvent may disperse the electrode active material and the like. The solvent may be an aqueous solvent or a non-aqueous solvent. The solvent may include dimethyl sulfoxide (DMSO), isopropyl alcohol, N-methylpyrrolidone (NMP), acetone, water or a mixture thereof. An amount of the solvent to be used may be determined based on target viscosity of the slurry. Parameters that determine the amount of the solvent to be used include a thickness to which the slurry is to be applied, manufacturing yield, and workability.

A positive electrode active material is a material that may cause an electrochemical reaction. The positive electrode active material may be a lithium transition metal oxide. For example, the positive electrode active material may include: a layered compound substituted with one or more transition metal, e.g., lithium cobalt oxide (LiCoO₂) or lithium nickel oxide (LiNiO₂); lithium manganese oxide substituted with one or more transition metal; lithium nickel-based oxide expressed by a chemical formula of LiNi_{1-y}M_{y}O₂ (here, M is Co, Mn, Al, CU, Fe, Mg, B, Cr, Zn or Ga, and 0.01≤y≤0.7); lithium nickel cobalt manganese compound oxide expressed by a chemical formula of Li_{1+z}Ni_{b}Mn_{c}Co_{1-(b+c+d)}M_{d}O₍₂₋ₑ₎A, e.g., Li_{1+z}Ni_{1/3}Co_{1/3}Mn_{1/3}O₂ or Li_{1+zN}i_{0.4}Mn_{0.4}Co_{0.2}O₂ (here, -0.5≤z≤0.5, 0.1≤b≤0.8, 0.1≤c≤0.8, 0≤d≤0.2, 0≤e≤0.2, b+c+d<1, M is Al, Mg, Cr, Ti, Si or Y, and A is F, P or Cl); or olivine-based lithium metal phosphate expressed by a chemical formula of Li₁₊ₓM_{1-y}M'_{y}PO_{4-z}X_{z} (here, M is a transition metal, and more particularly, Fe, Mn, Co or Ni, M' is Al, Mg or Ti, X is F, S or N, -0.5≤x≤+0.5, 0≤y≤0.5, and 0≤z≤0.1).

A negative electrode active material may include, for example, carbon such as non-graphitized carbon or graphite-based carbon. The negative electrode active material may include, for example, a metal composite oxide such as LiₓFe₂O₃ (0≤x≤1), LixWO₂ (0≤x≤1), or SnₓMe₁₋ₓMe'_{y}O_{z} (here, Me is Mn, Fe, Pb, or Ge, Me' is Al, B, P, Si, a Group I element, a Group II element or a Group III element of the periodic table, or halogen, 0<x≤1, 1≤y≤3, and 1≤z≤8). The negative electrode active material may include, for example, lithium metal, lithium alloy, silicon-based alloy, or tin-based alloy. The negative electrode active material may include, for example, a metal oxide such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, or Bi₂O₅. The negative electrode active material may include, for example, a conductive polymer such as polyacetylene, a Li-Co-Ni-based material, etc.

The conductive material may not cause a chemical change in a finally manufactured secondary battery and may have conductivity. For example, the conductive material may include: graphite such as natural graphite or artificial graphite; carbon black such as acetylene black, Ketjen black, channel black, furnace black, lamp black or thermal black; conductive fibers such as carbon fibers or metal fibers; metal powder such as carbon fluoride, aluminum or nickel powder; conductive whiskey such as zinc oxide or potassium titanate; conductive metal oxide such as titanium oxide; polyphenylene derivatives, or the like.

The binder may enhance a binding force between the active material and the conductive additive and a binding force of the electrode plate. The binder may include, for example, polyvinylidene fluoride, polyvinyl alcohol, carboxymethylcellulose (CMC), starch, hydroxypropylcellulose, regenerated cellulose, polyvinylpyrrolidone, tetrafluoroethylene, polyethylene, polypropylene, ethylene-propylene-propylene-diene ter polymer (EPDM), sulfonated EPDM, styrene-butyrene rubber, fluorine rubber, various copolymers, or the like.

A sheet type electrode may be formed by applying the electrode slurry containing the electrode active material onto the electrode plate, and drying and roll-pressing the electrode slurry to form an electrode mixture layer. The electrode slurry may be applied onto the electrode plate by a coating die. The coating die may be, for example, a slot die. The electrode plate may be a positive electrode plate or a negative electrode plate, and the electrode active material may be a positive electrode active material or a negative electrode active material.

A thickness of the positive electrode plate may range from about 3 µm to about 500 µm. The positive electrode plate may not cause a chemical change in a finally manufactured secondary battery and may have high conductivity. The positive electrode plate may include, for example, stainless steel, nickel, titanium, baked carbon, or aluminum. The positive electrode plate may include stainless steel surface-treated with carbon, nickel, titanium, silver, or the like. A surface of the positive electrode plate may include a fine uneven structure to increase the adhesion of the active material. The positive electrode plate may be in the form of a film, sheet, foil or a net, a porous form, or the form of foam or non-woven fabric.

A thickness of the negative electrode plate may be in a range of about 3 µm to about 500 µm. The negative electrode plate may not cause a chemical change in a finally manufactured secondary battery and may have high conductivity. The negative electrode plate may include copper, stainless steel, aluminum, nickel, titanium, baked carbon, or aluminum-cadmium alloy. The negative electrode plate may include stainless steel surface-treated with carbon, nickel, titanium, silver, or the like. A surface of the negative electrode plate may include a fine uneven structure to increase the adhesion of the active material. The negative electrode plate may be in the form of a film, sheet, foil or a net, a porous form, or the form of foam or non-woven fabric.

The shim plate 130 may be interposed between the first die 110 and the second die 120. The first die 110 may be in contact with a lower surface of the shim plate 130. The second die 120 may be in contact with an upper surface of the shim plate 130.

Hereinafter, the technical idea of the present disclosure will be described with respect to an aspect in which the first die 110 and the second die 120 are separate elements as described above. Based on the description herein, those of ordinary skill in the art will readily be able to derive an aspect in which the first die 110 and the second die 120 are integrated to form an integral die.

According to example aspects, the first die 110 and the second die 120 may have shapes that are symmetrical to each other. According to example aspects, each of the first die 110 and the second die 120 may have a roughly four-sided pyramid shape but is not limited thereto.

The first die 110 may include a manifold 111 and a hole 110H connected to the manifold 111. The electrode slurry may flow into the manifold 111 through the hole 110H. After the manifold 111 is filled with the electrode slurry, the electrode slurry may be discharged to the outside of the die coater 100. The electrode slurry may be discharged to the outside from the manifold 111 through slits 130S1 and 130S2 in the shim plate 130.

The manifold 111 may have a well shape with a certain depth from an upper surface of the first die 110. The manifold 111 may include a first side 111S1 and a second side 111S2 which are substantially parallel to each other. The first side 111S1 may be in a direction in the electrode slurry is discharged. The second side 111S2 may be opposite to the first side 111S1. The manifold 111 may include an inclined surface connected to the first side 111S1 and thus the electrode slurry may be stably discharged from the die coater 100.

### (Second Aspect )

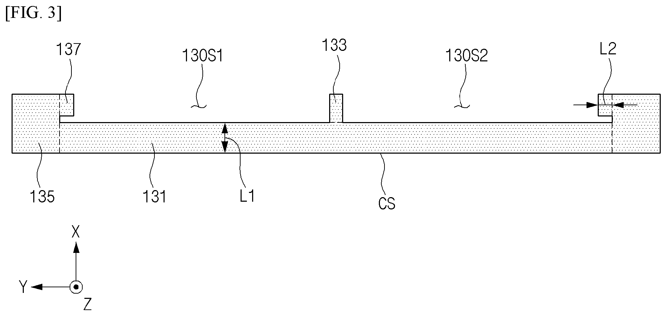

FIG. 3 is a plan view of the shim plate 130.

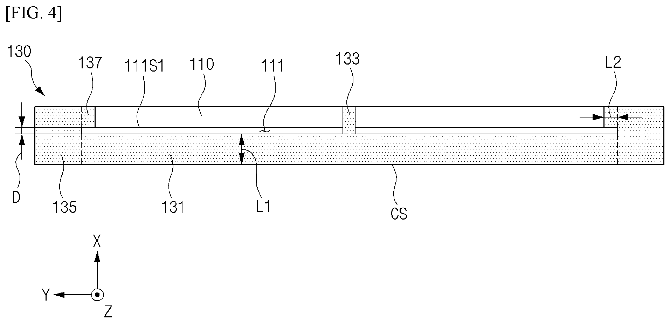

FIG. 4 illustrates the shim plate 130 on the first die 110.

Referring to FIG. 3 and FIG. 4, the shim plate 130 is placed on the first die 110.

Referring to FIG. 3, the shim plate 130 may include a base 131, a separator 133, wings 135, and guides 137.

An X-axis direction may be a direction in which an electrode slurry is discharged. A Y-axis direction may be substantially perpendicular to the X-axis direction. A Z-axis direction may be substantially perpendicular to the X-axis direction and the Y-axis direction. The Z-axis direction may be a thickness direction of the shim plate 130.

According to example aspects, the base 131 may extend in the Y-axis direction. The Y-axis direction may be referred to as a longitudinal direction of the base 131. The base 131 may partially overlap the manifold 111 in the Z-axis direction. The base 131 may partially cover the manifold 111 in the Z-axis direction.

According to example aspects, the separator 133 may be connected to the base 131. The separator 133 may protrude from the base 131 in the X-axis direction. As a non-limiting example, the separator 133 may be at a central part of the base 131 in the Y-axis direction. The separator 133 may divide the slit 130S1 and the slit 130S2. A region through which the slurry is discharged may be separated by the separator 133.

According to example aspects, the shim plate 130 may include two or more separators and three or more slits due to the two or more separators. In this case, the two or more separators may divide spaces between the guides 137 into equal parts to provide slits with substantially the same width in the Y-axis direction.

According to example aspects, the wings 135 may be connected to opposite ends of the base 131 in the Y-axis direction. A length of the wings 135 in the X-axis direction may be greater than a length L1 of the base 131 in the X-axis direction. Sides of the wings 135 perpendicular to the X-axis direction may form a common surface CS with a side of the base 131 perpendicular to the X-axis direction. The common surface CS may be opposite to a portion of the shim plate 130 in which the slits 130S1 and 130S2 are formed.

According to example aspects, the guides 137 may protrude from the wings 135 in the Y-axis direction. A width of each of the slits 130S1 and 130S2 in the Y-axis direction may be determined by the guides 137. A width of an entire area of the electrode plate on which the electrode slurry is applied may be determined by a length L2 of the guides 137.

According to example aspects, the length L1 of the base 131 in the X-axis direction may be in a range of about 25 mm to about 100 mm. According to example aspects, the length L1 of the base 131 in the X-axis direction may be about 30 mm or more. According to example aspects, the length L1 of the base 131 in the X-axis direction may be about 35 mm or more. According to example aspects, the length L1 of the base 131 in the X-axis direction may be about 40 mm or more. According to example aspects, the length L1 of the base 131 in the X-axis direction may be about 45 mm or more. According to example aspects, the length L1 of the base 131 in the X-axis direction may be about 50 mm or more. According to example aspects, the length L1 of the base 131 in the X-axis direction may be about 55 mm or more. According to example aspects, the length L1 of the base 131 in the X-axis direction may be about 60 mm or more. According to example aspects, the length L1 of the base 131 in the X-axis direction may be about 65 mm or more. According to example aspects, the length L1 of the base 131 in the X-axis direction may be about 70 mm or more.

According to example aspects, the length L2 of each of the guides 137 in the Y-axis direction may be in a range of about 4 mm to about 50 mm. According to example aspects, the length L2 of each of the guides 137 in the Y-axis direction may be about 45 mm or less. According to example aspects, the length L2 of each of the guides 137 in the Y-axis direction may be about 40 mm or less. According to example aspects, the length L2 of each of the guides 137 in the Y-axis direction may be about 35 mm or less. According to example aspects, the length L2 of each of the guides 137 in the Y-axis direction may be about 30 mm or less. According to example aspects, the length L2 of each of the guides 137 in the Y-axis direction may be about 25 mm or less. According to example aspects, the length L2 of each of the guides 137 in the Y-axis direction may be about 20 mm or less. According to example aspects, the length L2 of each of the guides 137 in the Y-axis direction may be about 15 mm or less. According to example aspects, the length L2 of each of the guides 137 in the Y-axis direction may be about 10 mm or less. According to example aspects, the length L2 of each of the guides 137 in the Y-axis direction may be about 5 mm or less.

According to example aspects, a distance D between the base 131 and the first side 111S1 of the manifold 111 in the X-axis direction may be in a range of 5 mm to 50 mm. An experimental example reveals that when the distance D between the base 131 and the first side 111S1 of the manifold 111 in the X-axis direction was 5 mm or more, discharge performance when the coating die 100 (see FIG. 1) was used was not limited by the shim plate 130. The experimental example also reveals that when the distance D between the base 131 and the first side 111S1 of the manifold 111 in the X-axis direction was less than 5 mm, the discharge performance when the coating die 100 (see FIG. 1) was used decreased. The distance D between the base 131 and the first side 111S1 of the manifold 111 in the X-axis direction may be equal to a width of the manifold 111 exposed by the base 131 in the X-axis direction.

According to example aspects, the distance D between the base 131 and the first side 111S1 of the manifold 111 in the X-axis direction may be 45 mm or less. According to example aspects, the distance D between the base 131 and the first side 111S1 of the manifold 111 in the X-axis direction may be 40 mm or less. According to example aspects, the distance D between the base 131 and the first side 111S1 of the manifold 111 in the X-axis direction may be 35 mm or less. According to example aspects, the distance D between the base 131 and the first side 111S1 of the manifold 111 in the X-axis direction may be 30 mm or less. According to example aspects, the distance D between the base 131 and the first side 111S1 of the manifold 111 in the X-axis direction may be 25 mm or less. According to example aspects, the distance D between the base 131 and the first side 111S1 of the manifold 111 in the X-axis direction may be 20 mm or less. According to example aspects, the distance D between the base 131 and the first side 111S1 of the manifold 111 in the X-axis direction may be 15 mm or less. According to example aspects, the distance D between the base 131 and the first side 111S1 of the manifold 111 in the X-axis direction may be 10 mm or less.

The shim plate 130 may be finely aligned for precise coating after the shim plate 130 is arranged on the first die 110. A shim plate of the related art is likely to deform due to lack of rigidity during fine alignment. Here, the longer each of guides in the Y-axis direction and the shorter a base in the X-axis direction, the easier the shim plate may deform. Because the shim plate is an expensive product that is precisely manufactured, frequent deformation of the shim plate significantly increases production costs of a secondary battery.

According to example aspects, the deformation of the shim plate 130 may be prevented, because the length L2 of each of the guides 137 in the Y-axis direction is in the range of about 4 mm to about 50 mm and the distance D between the base 131 and the first side 111S1 of the manifold 111 in the X-axis direction is in the range of 5 mm to 50 mm. Accordingly, the reliability of the die coater 100 and the economic feasibility of the coating process may be improved.

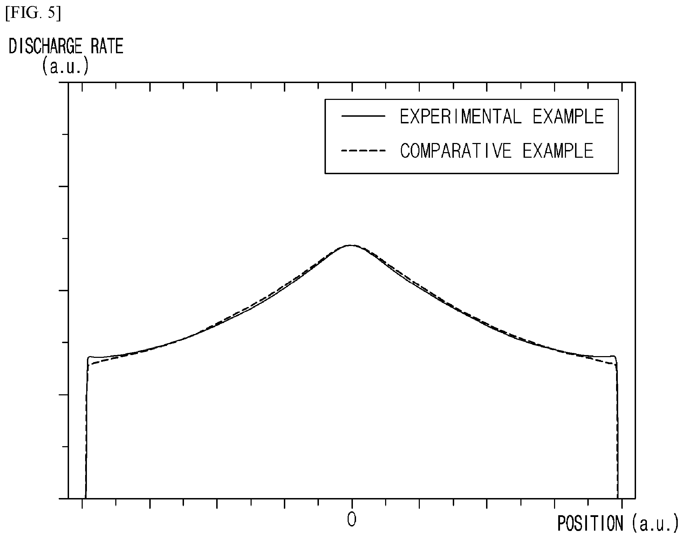

FIG. 5 is a graph for describing an effect of a shim plate according to example aspects. In FIG. 5, a horizontal axis represents positions on a coating die in in the Y-axis direction. and a vertical axis represents discharge rates. The positions and the discharge rates are expressed in arbitrary units (a.u.).

Referring to FIG. 3, FIG. 4, and FIG. 5, it was confirmed that a discharge rate-position profile in an experimental example in which the length L2 of each of the guides 137 in the Y-axis direction was 4 mm was substantially same as a discharge rate-position profile in a comparative example in which a length of each of guides in the Y-axis direction was 150 mm. According to example aspects, the mechanical reliability of the shim plate 130 may be improved without changing discharge rate characteristics by sufficiently reducing the length L2 of each of the guides 137 in the Y-axis direction.

### (Third Aspect )

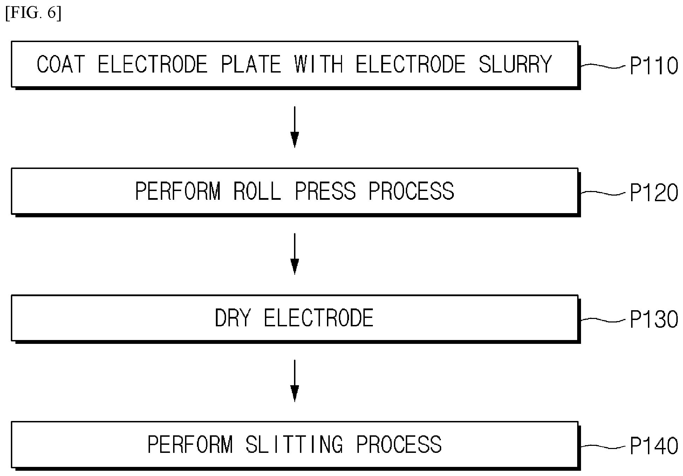

FIG. 6 is a flowchart of a secondary battery manufacturing method according to example aspects.

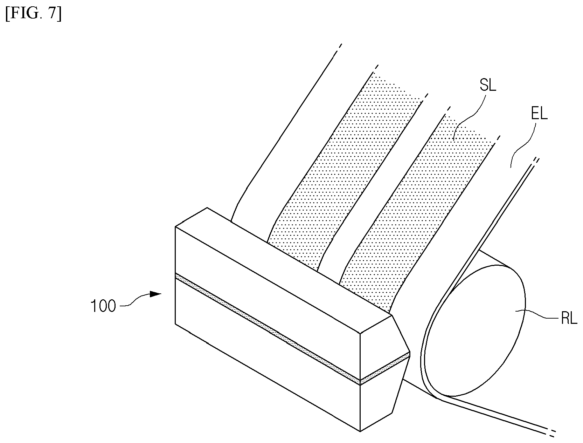

FIG. 7 is a flowchart of a secondary battery manufacturing method according to example aspects.

Referring to FIG. 6 and FIG. 7, in P 110, an electrode plate EP may be coated with an electrode slurry SL. The coating of the electrode plate EP with the electrode slurry SL may be performed by the die coater 100 described above with reference to FIG. 1, FIG. 2, FIG. 3, and FIG. 4. The coating of the electrode plate EP with the electrode slurry SL may be performed by a roll-to-roll method as shown in FIG. 7 but aspects are not limited thereto. For example, the electrode plate EP moved on a belt may be coated with the electrode slurry SL by the die coater 100 that is stationary or the electrode plate EP on a stationary support may be coated with the electrode slurry by the die coater 100 that is moving.

In the roll-to-roll method, the electrode plate EP transferred and pressurized by a roll RL may be coated with the electrode slurry SL by the die coater 100. Accordingly, a sheet type electrode EL may be provided.

Next, in P120, the roll press process may be performed. The roll press process may be performed by a roll press device. The roll press device may include a plurality of rolls for applying pressure to the sheet type electrode EL. The sheet type electrode EL may be thinned and planarized by the plurality of rolls. By performing the roll press process, a bonding force between a surface of the electrode plate EP and an active material may be enhanced. Due to the enhancement of the bonding force between the surface of the electrode plate EP and the active material, the movement of lithium ions between the electrode EL and the active material may be promoted and power and performance of a finally manufactured secondary battery may be improved.

Next, in P130, the electrode EL may be dried. The drying process may be performed on the electrode EL in a drying chamber. The drying process may be performed on the electrode EL by supplying dry air into the drying chamber or supplying thermal energy to the electrode EL in the drying chamber through infrared rays, high-temperature air or the like. **In** the drying process, the uniformity and reliability of the electrode EL may be improved by removing moisture from the electrode EL.

Next, in P140, the slitting process may be performed. The slitting process is a process of dividing the electrode EL into a plurality of electrodes. The slitting process may be performed by a slitting device. The slitting device may include a slitting knife for dividing the electrode EL into a plurality of electrodes. Thereafter, the electrode EL may be cut into a shape with a tab by the notching process.

The present disclosure has been described above in more detail with reference to the drawings, the aspects, etc. However, the configurations illustrated in the drawings or aspects described in the present specification are only aspects of the present disclosure and do not reflect all the technical ideas of the present invention and thus it should be understood that various equivalents and modifications that replace the configurations would have been made at the filing date of the present application.

## Claims

1. A shim plate configured to discharge an electrode slurry in a first direction, the shim plate comprising:
a base extending in a second direction perpendicular to the first direction;
a separator connected to the base and protruding from the base in the first direction;
wings connected to opposite ends of the base in the second direction; and
guides connected to the wings and protruding from the wings and toward the separator in the second direction,
wherein a length of each of the guides in the second direction is in a range of from 4 mm to 50 mm.

2. The shim plate of claim 1, wherein a length of each of the guides in the second direction is 20 mm or less.

3. The shim plate of claim 1, wherein a length of each of the guides in the second direction is 10 mm or less.

4. A die coater comprising:
a first die including a manifold configured to be supplied with an electrode slurry; and
a shim plate provided on the first die and including a slit that is configured to be a path in which the electrode slurry is to be discharged, wherein the shim plate comprises:
a base that partially covers the manifold and extends in a second direction that is perpendicular to a first direction in which the electrode slurry is to be discharged;
wings connected to opposite ends of the base in the second direction; and
guides connected to the wings and protruding from the wings and toward a center of the base in the second direction.

5. The die coater of claim 4, wherein a width of the manifold exposed by the base in the first direction is in a range of from 5 mm to 50 mm.

6. The die coater of claim 5, wherein the width of the manifold exposed by the base in the first direction is 20 mm or less.

7. The die coater of claim 5, wherein the width of the manifold exposed by the base in the first direction is 10 mm or less.

8. The die coater of claim 4, wherein a length of each of the guides in the second direction is in a range of from 4 mm to 50 mm.

9. The die coater of claim 8, wherein the length of each of the guides in the second direction is 20 mm or less.

10. The die coater of claim 8, wherein the length of each of the guides in the second direction is 10 mm or less.

11. A die coater comprising:
a first die including a manifold configured to be supplied with an electrode slurry; and
a shim plate disposed on the first die and including a slit that is configured to be a path in which the electrode slurry is to be discharged, wherein the shim plate comprises:
a base that extends in a second direction perpendicular to a first direction in which the electrode slurry is to be discharged;
wings connected to opposite ends of the base in the second direction; and
guides connected to the wings and protruding from the wings and toward a center of the base in the second direction, wherein
a length of each of the guides in the second direction is in a range of from 4 mm to 50 mm.

12. The die coater of claim 11, wherein the length of each of the guides in the second direction is 10 mm or less.

13. The die coater of claim 11, wherein a length of the base in the first direction is in a range of from 25 mm to 100 mm.

14. The die coater of claim 13, wherein the length of the base in the first direction is 50 mm or more.
